# NEUE EUROPÄISCHE PATENTSCHRIFT

(11) **EP 1 558 434 B2**
(45) Veröffentlichungstag und Bekanntmachung des Hinweises auf die Entscheidung über den Einspruch: **22.11.2017**
(45) Hinweis auf die Patenterteilung: 21.11.2012
(21) Anmeldenummer: 03702261.3
(22) Anmeldetag: 21.02.2003
(51) Int. Cl.: B29C 45/72

(54) **VERFAHREN SOWIE EINRICHTUNG ZUR NACHBEHANDLUNG UND KÜHLUNG VON PREFORMEN**
METHOD AND DEVICE FOR THE SECONDARY TREATMENT AND THE COOLING OF PREFORMS
PROCEDE ET DISPOSITIF POUR LE TRAITEMENT ULTERIEUR ET LE REFROIDISSEMENT DE PREFORMES

(30) Priorität: 05.11.2002 CH 185002; 17.01.2003 CH 63032003; 19.02.2003 CH 247032003
(43) Veröffentlichungstag der Anmeldung: 03.08.2005
(73) Patentinhaber: Netstal-Maschinen AG, 8752 Näfels (CH)
(72) Erfinder: WEINMANN, Robert, CH-8872 Weesen (CH)
(74) Vertreter: Wilhelm, Ludwig
(86) Internationale Anmeldenummer: PCT/CH2003/000132
(87) Internationale Veröffentlichungsnummer: WO 2004/041510

(56) Entgegenhaltungen:
- EP-A- 1 215 031
- WO-A1-97/39874
- WO-A1-03/097326
- US-A- 4 592 719
- US-A- 5 707 662
- US-A1- 2002 028 265

## Beschreibung

### Technisches Gebiet

Die Erfindung betrifft ein Verfahren zur Nachkühlung von Preformen nach der Entnahme aus den offenen Formhälften einer Spritzgiessmaschine, wobei die Preformen in noch heissem Zustand mittels einer Entnahmevorrichtung aus den offenen Formen entnommen und in steuerbaren Phasen mittels wassergekühlten Kühlhülsen nachgekühltwerden, wobei die Preformen in einer Entnahmephase "A" direkt aus den offenen Giessformen entnommen und die Kühlhülsen eingeführt werden und, in einer Phase "B" einer Intensivkühlung unterworfen und anschliessend in einer Nachkühlphase, welche ein Mehrfaches der Spritzzykluszeit beträgt, vollständig gekühlt werden. Die Erfindung betrifft ferner eine Vorrichtung zur Nachkühlung von Preformen nach deren Entnahme aus den offenen Formhälften einer Spritzgiessmaschine, welche Hilfsmittel für das Abstossen der halbstarren Preformen von den Teileformen und eine Nachkühlung der Preformen in einer Entnahmestation sowie einer Nachkühleinrichtung mittels wassergekühlten Kühlhülsen und Blasdorne aufweist, wobei die Entnahmestation eine Entnahmevorrichtung mit horizontal liegend angeordneten Kühlhülsen aufweist; denen in die. Preformen einführbare Blasdorne zugeordnet sind, und die Vorrichtung eine Steuerung aufweist zur Steuerung aller Bewegungen für das Handling der Preformen und der Blasdorne sowie für einen Einsatz von Druckluft und gegebenenfalls Saugluft.

### Stand der Technik

Bei der Herstellung von Spritzgiessteilen ist für die totale Zeit eines vollen Zyklus die Kühlzeit ein bestimmender Faktor. Die Hauptkühlleistung findet noch in den Giessformhälften statt. Beide Giessformhälften werden während dem Giessprozess intensiv wassergekühlt, so dass die Temperatur der Spritzgiessteile noch in der Form von etwa 280°C, zumindest in den Randschichten, auf einen Bereich von 70° C bis 120° C gesenkt werden kann. Es wird in den äusseren Schichten sehr rasch die sogenannte Glastemperatur von etwa 140° C durchfahren. Der eigentliche Giessvorgang bis zur Entnahme der Spritzgiessteile konnte in der jüngsten Vergangenheit im Falle der Herstellung von dickwandigen Preformen auf etwa 12 bis 15 Sekunden und bei dünnwandigen Preformen auf unter 10 Sekunden gesenkt werden. Dies bei optimalen Qualitäten in Bezug auf die noch halbstarren Preformen. Die Preformen müssen in den Formhälften so stark verfestigtwerden, dass diese mit relativ grossen Kräften von den Auswurfhilfen angefasst und ohne Deformation bzw. Schäden einer Entnahmevorrichtung übergeben werden können. Die Entnahmevorrichtung weist eine den Spritzgiessteile-Aussenabmessungen angepasste Form auf. Die intensive Wasserkühlung in den Giessformhälften erfolgt vor allem bei grossen Wandstärken von aussen nach innen, physikalisch bedingt, stark zeitverzögert. Dies bedeutet, dass die genannten 70°C bis 120°C nicht einheitlich im ganzen Querschnitt erreicht werden. Die Folge ist, dass im Materialquerschnitt gesehen eine rasche Rückerwärmung, von innen nach aussen erfolgt; sobald die intensive Wasserkühlung durch die Formen unterbrochen wird. Der Nachkühlung kommt aus zwei Gründen grösste Bedeutung zu. Erstens sollen Formänderungen bis zum formstabilen Lagerzustand aber auch Oberflächenschäden, etwa Druckstellen, usw., vermieden werden. Es muss zweitens verhindert werden, dass die Abkühlung im höheren Temperaturbereich zu langsam erfolgt und sich z.B. durch Rückerwärmungen örtlich schädliche Kristallbildungen einstellen. Ziel ist ein gleichmässig amorpher Zustand im Material der fertigen Preform. Die Resttemperatur soll so tief sein, dass in den relativ grossen Abpackgebinden mit Tausenden von lose eingeschütteten Teilen an den Berührungspunkten keine Haftschäden entstehen können. Die Spritzgiessteile dürfen auch nach leichter Rückenrvärmung eine Oberflächentemperatur von 40°C nicht überschreiten. Die Nachkühlung nach der Entnahme der Preformen aus der Spritzgiessform ist so wichtig wie die Hauptkühlung in den Giessformen.

Die US-PS4592719 (Bellehache et al.) schlägt vor, die Produktionsrate der Preformen dadurch zu erhöhen, indem atmosphärische Luft zur Kühlung verwendetwird. Die Luft wird als Kühlluftwährend dem Transport bzw. dem "Handling" durch gezielte Strömungsführung, sowohl innen wie aussen, an den Preformen mit maximaler Kühlwirkung eingesetzt. Eine Entnahmevorrichtung, welche so viele Saugrohre aufweist, wie in einem Spritzzyklus Teile hergestellt werden, fährt zwischen den beiden offenen Formhälften ein. Die Saugrohre werden sodann über die Preformen geschoben. Gleichzeitig beginnt über eine Saugleitung Luft im Bereich der ganzen, von den Saugrohren umfassten Umfangsfläche jedes Blasformteiles zu strömen, so dass diese vom Moment der Übernahme in die Saughülse mit der Luft von aussen gekühlt werden. Die Entnahmevorrichtung fährt nach vollständiger Übernahme aller Spritzgiessteile eines Giesszyklusses aus dem Bewegungsraum der Formhälften heraus. Die Formhälften sind sofort wieder frei und werden für den nachfolgenden Giesszyklus wieder geschlossen. Die Entnahmevorrichtung verschwenkt die Preformen nach der Ausfahrbewegung von einer horizontalen in eine aufrechte Lage. Gleichzeitig fährt eine Transfervorrichtung exakt in eine Übergabeposition über der Entnahmevorrichtung. Die Transfervorrichtung weist eine gleiche Zahl Innengreifer auf, wie die Entnahmevorrichtung Saugrohre hat. Rechtzeitig nach der Übergabe aller Spritzgiessteile und vor dem erneuten Öffnen der Formhälften wird die Entnahmevorrichtung zurück in die Einfahrposition geschwenkt, so dass die nächste Charge Spritzgiessteile den Formen entnommen werden kann. Die Transfervorrichtung übergibt in der Zwischenzeit die Spritzgiessteile einem Transporteur und fährt ohne die Preformen zurück in die Übernahmeposition für die nächstfolgende Charge.

Bei der WO 00/24562 (Netstal) sowie bei der EP 1 215 031 einer älteren Anmeldung der Anmelderin, steht das Handling im Vordergrund, z.B. dass das Hängenbleiben einzelner Spritzgiessteile und entsprechender Doppelstecker vermieden wird, so dass die Produktivität bei optimaler Kühlwirkung gesteigert werden kann.

Es wird davon ausgegangen, dass die Bodenkühlung am Wichtigsten ist und es nicht nachteilig ist, wenn durch das Schrumpfen der Preformen in den Kühlhülsen direkt nach der Entnahme aus den Formhälften sich ein geringfügiges Spiel zu den Kühlhülsen bildet. Dies im Gegensatz zu der EP 0 266 804, welche durch konisches Ausbilden der Kühlhülseninnenseite und Preformaussenseite sowie durch sukzessives Nachsaugen der Preformen jegliches Spiel zwischen der Preformaussenseite sowie der Kühlhülseninnenseite ausschliesst. Hier wird der Boden gar nicht gekühlt.

Die EP 0 947 304 (Husky) hatte sich die Aufgabe gestellt, die Kühleffizienz und die Qualität der Preformen zu verbessern und die gesamte Zykluszeit zu verkürzen. Die Druckschrift beschreibt in erster Linie das Problem der Kristallbildung bei schlechter Führung der Nachkühlung. Es wird vorgeschlagen, durch eine gesteuerte und zwangsgeführte Blasdüse primär die innere Dompartie mit Luft zu kühlen, wobei der Kühleinsatz sofort nach der Entnahme der,Preformen aus den offenen Formhälften erfolgt und dadurch eine örtliche Kristallbildung verhindern soll.

Die US-PS 6 332 770 (Husky) löst das selbe Problem wie die EP 0 947 304, jedoch durch eine Kühlung durch eine örtliche Wirkung über Konvektionskühlung. Ein innen gekühlter Dorn wird bis in den inneren Dombereich eingeführt. In erster Linie wird dabei die Dompartie der Preformen durch konvektive Kühlung behandelt. Der grosse Nachteil des Vorschlages mit der konvektiven Kontaktkühlung mittels eines in die Preform einführbaren Dornes liegt in der Problematik der präzisen, mechanisch zwangsweisen Einführung des Dornes bis zur Herstellung eines Kontaktes mit der je betreffenden Innenwandfläche der Preformen und vor allem der erforderlichen Präzision für die Einführung von 100 und mehr Dornen. Die ganze Maschine mit allen Bewegungen muss in höchster Präzision ausgebildet werden, damit jede einzelne Preform gleicherweise und ohne Druckschäden kontaktiert wird.

Eine ganz besonders interessante Lösung für die Nachkühlung von Preformen nach deren Entnahme aus dem Produktionswerkzeug wird in der JP-PS 8-103948 beschrieben (Footier KK). Es ist erkannt worden, dass ein vollständiges Abkühlen der Preformen, noch in dem Produktionswerkzeug, den ganzen Spritzzyklus verlängert. Die Formen müssen viel später geöffnet werden, so dass die Produktivität in grossem Ausmass reduziert wird. Es wird deshalb ein vollständig getrennter Nachkühlerfürdie noch heissen Preformen nach deren Entnahme aus dem Produktionswerkzeug vorgeschlagen. Dies erlaubt, mit einer einfachen Konstruktion eine hohe Kühleffizienz zu erreichen. Die Preformen werden einem Preformnachkühler mit einer entsprechend grossen Anzahl Blasdorne übergeben. Jede Preform wird dabei gleichzeitig sowohl innen wie aussen gekühlt. Die Innenkühlung erfolgt über die Blasdorne, welche im Inneren einen Blasluftkanal aufweisen. Die Relativbewegung für die Einführung der Blasdorne erfolgt zwangsweise durch einen Entnahmeroboter. Die Blasdorne weisen zuvorderst eine Blasluftöffnung auf. Der Blasluftstrahl wird direkt senkrechtauf den domförmig geschlossenen Boden der Preformen gerichtet und kann danach in entgegengesetzter Richtung entlang der inneren Wand der Preform geführt werden und am offenen Ende der Preform frei abströmen. Diese Lösung erlaubt die kürzest mögliche Spritzgiesszykluszeit, eine sehr hohe Effizienz der ganzen Produktion und verhindert jegliche Kristallisation, ganz besonders in dem.Angussbereich und gestattet dadurch, mit grösstmöglicher Effizienz Preformen mit höchster Qualität zu erzeugen.

Jede der dargestellten Lösungen hat für sich Vorteile. Dabei werden aber die Vorteile durch spezifische Beschränkungen oder grössere Aufwendungen erkauft. Ein wichtiges Ziel bei der Nachkühlung von Preformen ist neben der Verhinderung von Kristallbildung die grösstmögliche Formerhaltung. Im Rahmen der Nachkühlung besteht die Gefahr, dass sich die Preformen verbiegen und nicht mehr vollkommen achssymmetrisch sind. Die Folge kann sein, dass einzelne Preformen in dem Nachkühler stecken bleiben, so dass bei der nächsten Charge sogenannte Doppelstecker entstehen. Es wird dabei in der selben Kühlhülse eine zweite Preform eingeschoben. Es hat sich gezeigt, dass die ganze Nachkühlung in zwei Abschnitte aufgeteilt werden kann. Eine erste Phase direkt nach der Entnahme der Preformen aus den Formhälften und eine zweite Phase in der relativ lang dauernden Nachkühlung. Die eigentlich heikle Phase ist die erste, welche starken Einfluss auf die Endqualität der Preformen hat. Eine wichtige Erkenntnis der jüngsten Zeit besagt, dass es nicht Ziel ist, die Kristallbildung total zu unterbinden, sondern vielmehr, den kristallinen Anteil im ganzen Preform möglichst tief zu halten.

Der neuen Erfindung wurde nun die Aufgabe gestellt, die Kühlung im Hinblick auf eine verkürzte Spritzgiesszykluszeit zu optimieren mit möglichst maximaler Qualität und mit dem kleinstmöglichen Anteil an Kristallbildung der Preformen zu erreichen, ohne grössere verfahrenstechnische Aufwendungen oder Mehrkosten für die Herstellung der Spritzgiessmaschine.

### Darstellung der Erfindung

Die Erfindung wird durch ein verfahren gemäß Anspruch 1 und eine Vorrichtung gemäß Anspruch 6 gelößt.

Es hat sich gezeigt, dass die erste Nachkühlphase ganz besonders heikel ist, da die Preformen noch ungenügend formstabil sind. Die Gefahr, dass sich der Blasformteil in Bezug auf den Gewindeteil leicht aus der Gewindeachse "verbiegt", ist in der Phase der Entnahme der Preform in liegender Position bei horizontal arbeitenden Spritzgiessmaschinen tatsächlich ein echtes Problem. Dies gilt vor allem, wenn die Kühlzeit innerhalb der Spritzgiessformen auf ein Minimum gebracht und die Preformen noch relativ heiss und entsprechend weich sind. Sind die Preformen in der.ersten Phase der Nachkühlung in liegender Lage, dann neigen sie dazu, sich nach unten auf das entsprechenden Kühlhülsenteil aufzulegen. Durch einen besseren Kühlkontakt im unteren Bereich wird die Kühlhülse unten stärker abgekühlt, so dass in der Preform Spannungen auftreten und die Preform eine Tendenz zum Verbiegen hat. Wenn in der ersten Phase der Nachkühlung bei verkürzter Kühlung in den Giessformen einzelne Preformen sich leicht deformieren, dann kann die entsprechende Formänderung der zunehmend verfestigten Preformen nicht mehr korrigiert werden.

Die neue Erfindung geht primär von dem Kühlkonzept aus, bei dem die einzelnen Preformen in der Nachkühlung nur mit dem Blasformteil in Kühlhülsen eingeführt werden. Dabei überragen die Gewindeteile die Kühlhülsen. Dies hat den grossen Vorteil, dass die Preformen durch eine Linearbewegung in die Kühlhülsen der Entnahmevorrichtung eingeführt und wieder ausgezogen werden können. Die neue Lösung schlägt besonders in der Phase der Intensivkühlung direkt nach der Entnahme aus den Giessformen einen optimalen Kontakt mit der Kühlhülse vor und erreicht dadurch eine kurze, maximal intensivierte Temperaturabsenkung und Stabilisierung der Preformen in der ersten Nachkühlphase für die anschliessende Fertigkühlung. Die dynamische Einführung der Preformen bis zum vollständigen Wandkontakt in den Kühlhülsen, direkt nach der Entnahme der Preformen aus den Giessformen, jedoch vor dem länger dauernden Fertigkühlen, hat entscheidende Vorteile:

Der Kühleffekt ist, physikalisch bedingt, bei der grössten Temperaturdifferenz zwischen heissen Preformen und Kühlhülsen direkt nach der Entnahme aus den Giessformen am grössten. Hierbei ergibt das erzwungene, satte und vollflächige Anliegen der Preformen an die Innenfläche der Kühlhülsen den grösstmöglichen Gewinn durch eine Maximierung der direkten Wärmeleitung. Es findet eine sehr rasche Abkühlung der Preformaussenseite statt. Die Bildung von kristallinen Anteilen wird so auf ein Minimum gesenkt. Die noch heissen Preformen werden direkt nach deren Entnahme aus den Giessformen zur Erhaltung der Formgenauigkeit mit dem geringstmöglichen Spiel in eine Kühlform geschoben. Die nach der Entnahme rasch abgekühlte Preform behält damit beim anschliessenden Handling in Bezug auf die Symmetrie die Formgenauigkeit.

Bereits erste Tastversuche zeigten, dass die neue Lösung bei vollständiger Erhaltung der Qualitätsparameter eine Verkürzung der Giesszykluszeit von einer halben Sekunde erlaubte, was einer Steigerung der Produktivität von etwa 5% entspricht. Dies, weil die Preformen mit noch höherer Temperatur, somit schneller als im Stand der Technik, aus den Formen entnommen werden können. In der allerersten Phase der Nachkühlung ist das Anliegen des noch weichen Blasformteiles an die Innenwand der Kühlhülsen mit minimalen Luftdruckkräften möglich. Die Bewegung der Blasdorne erfolgt zeitlich im Rhythmus des Spritzgiesszyklus getaktet und die Einführbewegung weg- und/oder kraftgesteuert.

Die Kühlhülse wird im inneren Durchmesser höchstens um einige Hundertstel Millimeter grösser gewählt als die Aussenabmessungen der noch heissen Preformen. Durch eine gezielte Steuerung von Saug- und Blasluft kann ein Blähdruck erzeugt und die Preform zum vollständigen Anliegen an die ganze Innenwandfläche der Kühlhülse gebracht werden. Nach dem erstmaligen Anliegen der Preformen an die Innenwandfläche der Kühlhülsen wird der Flächenkontakt über mehrere Sekunden aufrechterhalten und dadurch die Kühlwirkung maximiert. Gleichzeitig wird ein Kalibrationseffekt für jede einzelne Preform erzeugt. Der Kalibrationseffekt gibt bei der Herstellung von Preformen die Möglichkeit für einen Produktions- und Qualitätsstandard, wie er im Rahmen des Standes der Technik nicht möglich war. Die Preformen werden kurz nach der Entnahme aus den Giessformen nochmals in eine exakte Form gepresst, so dass allfällige Massveränderungen nach dem ersten kritischen Handling aus den Giessformen in die Kühlhülsen, insbesondere ein Biegen der Preformen durch einseitiges Aufliegen in der Kühlhülse, ausgeschaltet werden können. Der Kalibrationseffekt gestattet, die Preformen noch früherden Formen zu entnehmen und dadurch eine noch kürzere Giesszykluszeit, ferner eine verbesserte erste Phase der Nachkühlung zu erreichen. Dies ist besonders im Hinblick auf das raschest mögliche Durchfahren der Glastemperatur und damit der schädlichen Kristallbildung sehr vorteilhaft. Die anschliessende Nachkühlung kann problemfreier in Bezug auf alle qualitativen Parameter in der erforderlichen Zeit durchgeführt, Preformen mit höchster Qualität erzeugt und gleichzeitig die Produktivität der Spritzgiessmaschine gesteigert werden. Die Erfindung erlaubt eine ganze Anzahl vorteilhafter Ausgestaltungen. Es wird dazu auf die Ansprüche 2 bis 5 sowie 7 bis 15 Bezug genommen.

Im Stand der Technik ist eine Lösung bekannt, bei der die Preform aussen konisch ausgebildetwird, wobei die Preform anfänglich nur teilweise eingeschoben, mit entsprechendem Unterdruck auf der Gegenseite schrittweise eingezogen und dauernd über die ganze Nachkühlzeit ein guter Wandkontakt mit der Kühlhülse aufrechterhalten wird. Der grosse Nachteil liegt darin, dass die Bodenpartien der Preformen nur sehr schlecht von aussen gekühlt werden. Bei der neuen Lösung wird das vollständige Einschieben dynamisch möglichst ohne Zeitverzug, im Wesentlichen innert Sekunden, durchgeführt. Der Wandkontakt kann mitdem leichten Blähdruck während dem Rest der Intensivkühlung aufrechterhalten werden. Für die Erzeugung des Blähdruckes weist jeder Blasdorn Blasluftöffnungen auf und wird gegenüber der jeweiligen Preform leicht abdichtend aufgesetzt. Blasluft und Saugluft werden dabei derart gesteuert, dass während der intensiven Kühlung ein leichter Überdruck in jeder Preform erzeugt, die Preform an die Innenwandung der Kühlhülse angepresst und dadurch kalibriert wird.

Ein wichtiges Ziel der neuen Lösung liegt darin, dass der Kühleinsatz während der intensiven Kühlung gestuft erfolgt. Die noch vorhandenen Temperaturunterschiede in den Preform werden nach der Entnahme aus den Giessformen so rasch wie möglich beseitigt. Gleichzeitig gelingt es, kristalline Anteile in der ganzen Preform auf den tiefstmöglichen Wert zu senken, wobei die Preform für die anschliessende Nachkühlung in einen vollständig formstabilen Zustand gebracht wird. Wenn die Preform bereits am Beginn der Nachkühlung die bestmögliche Symmetrie in Bezug auf die ganze äussere Form hat, kann nahezu mit Sicherheit die Gefahr von sogenannten Doppelsteckern auf Grund von verbogenen Preformen und entsprechenden Betriebsstörungen ausgeschlossen werden.

Die intensive Kühlung beträgt nur ein Bruchteil der ganzen Nachkühlung. Während der intensiven Kühlung wird die Temperatur im Mittel um 20 °C bis 40 °C abgesenkt. Eine starke Verlängerung der intensiven Kühlphase ist nicht vorteilhaft, weil die Wärmewanderung innerhalb dem Preformmaterial nicht gesteigert werden kann.

Die Blasdorne weisen einen als Sockel ausgebildeten Mantel auf, welcher einerseits Ausblasöffnungen für Kühlluft hat und andererseits über die Trägerplatte mit einer Druckluftquelle verbindbar ist, wobei der Mantel vorzugsweise über weniger als die halbe Länge des Saugrohres geführt ist. Die Trägerplatte wird mit zwei Kammern ausgebildet, eine erste Kammer mit Anschluss an eine Vakuumquelle und eine zweite Kammer mit Anschluss an eine Druckluftquelle, wobei das Saugrohr durch die zweite Kammer hindurch geführt und die erste Kammer direkt mit dem Raum zwischen dem Mantel und dem Saugrohr verbunden ist. Sowohl für die Saugluft wie für die Blasluft werden steuerbare Ventile angeordnet, so dass der zeitliche Einsatz optimierbar ist.

Die neue Lösung weist eine Entnahmevorrichtung mit Kühlhülsen und eine dazu bis zu einem Dichtschluss bewegbare Trägerplatte des Transfergreifers mit einem Kühlluftanschluss auf. Die Trägerplatte ist entsprechend der Zahl der Kühlhülsen mit Blasdorne mit Dichtungsringen bestückt, welche zu je einer Preform im Preforminneren eine Dichtstelle bilden zur Erzeugung eines leichten Blähdruckes im Inneren der Preformen. Die Dichtstelle ist in Bezug auf das offene Ende der Preformen angeordnet und wirkt erst am Ende der Einführbewegung der Blasdorne. Bevorzugt wird die Dichtstelle zwischen den einzelnen Blasdorne und dem äusseren Rand des Gewindeteiles der Preformen durch eine Weichdichtung hergestellt und der Rand des Gewindeteiles über die elastische Dichtung gehalten.

Eine dritte Ausgestaltung ist dadurch gekennzeichnet, dass die Vorrichtung für eine Innenkühlung in die Preformen einführbare Blasdorne einer gesteuert verschiebbaren Trägerplatte aufweist, wobei die einzelnen Blasdorne in Bezug auf die Preformen in Richtung der Einführbewegung nachgebend ausgebildet sind, derart, dass jeder Blasdorn mit kontrollierter Kraft bis zum Kontakt der inneren Dompartie der Preformen einführbar ist. Die Blasdorne können einen verschiebbar angeordneten Kontaktkopf und eine bis zum Kontaktkopf durchgehend geführte Luftbohrung aufweisen, welche in eine zwischen Blasdorn und Kontaktkopf in der Grösse veränderbare Blasluftkammer mündet. Vorteilhafterweise weist jeder Blasdorn für die Erzeugung einer kontrollierten Andrückkrafteine Druckfeder auf. Die Blasdornewerden mit einem Kontaktkühlkopf ausgebildet, zur mechanischen Kontaktierung und Kontaktkühlung der entsprechenden inneren Dompartie des jeweiligen Preforms, wobei die kontrollierte Kraftdurch Blasluft und/oderdurch eine Druckfeder erzeugbar ist. Der Kontaktkopf wird bevorzugt hülsenartig auf dem Blasdorn zwischen einer maximal ausgeschobenen und angezogenen Lage frei verschiebbar angeordnet.

Als einfachste und preisgünstigste konstruktive Gestaltung weist jeder Blasdorn einen verschiebbar angeordneten Kontaktkopf auf. Dabei wird bei jedem der Blasdorne eine bis zum Kontaktkopf durchgehend geführte Blasluftbohrung vorgesehen, welche in eine in der Grösse veränderbare Blasluftkammer mündet. Jeder Kontaktkopf ist hülsenartig auf dem Blasdorn zwischen einer maximal ausgeschobenen und angezogenen Lage frei verschiebbar angeordnet, wobei die ausgeschobene Lage durch die Blasluft und/oder eine Druckfeder und die angezogene Lage durch Unterdruck herstellbar ist. Die Kontaktköpfe können in dem Bereich der Kontaktspitze wenigstens eine Blasluftöffnung aufweisen, welche mit der Blasluftkammer verbunden sind. Die Kontaktspitze kann in dem Angussbereich der Preform geschlossen ausgebildet werden zur rein mechanischen Kontaktierung des entsprechenden innersten Teiles der Dompartie des jeweiligen Preforms. Jeder Blasdorn weist vorteilhafterweise einen an der Trägerplatte fixierbaren Blasdornsockel mit einer rohrförmigen Verlängerung in Blasluftrichtung auf, wobei der Kontaktkopf gegenüber der rohrförmigen Verlängerung verschiebbar ist. Der Kontaktkopf und der Blasdornsockel werden zumindest angenähert zylindrisch ausgestaltet, derart, dass zwischen den zylindrischen Formen und der Preforminnenseite sich eine Engstelle mit erhöhter Geschwindigkeit für die abströmende Blasluft bildet. In dem Bereich des Blasdornsockels können Querbohrungen angeordnet werden, welche an einer Vakuumquelle anschliessbar sind, um eine sichere Entnahme der Preformen aus den Kühlhülsen und eine Übergabe an den eigentlichen Nachkühler zu gewährleisten.

Die neue Lösung weist eine Nachkühlstation sowie eine Intensivkühlstation auf, wobei in der Intensivkühlstation sowohl die Preforminnenseite wie die Preformaussenseite innerhalb der Zeit eines Spritzgiesszyklusses intensiv kühlbar ist. Die Intensivkühistation kann als baulich unabhängig steuerbare Entnahmestation oder als Teil eines Nachkühlers ausgebildet sein, welcher eine Menge an Kühlhülsen aufweist, entsprechend mehrerer Chargen eines Spritzgiesszyklusses, besonders vorzugsweise von vier Chargen. Die ganze Nachkühlung weist eine Steuerung auf zur Steuerung aller Bewegungen für das Handling der Preformen und der Blasdorne sowie für einen zyklisch getakteten Einsatz von Druckluft und Saugluft; ferner einen Entnahmeroboter mit Kühlhülsen, einen Transfergreifer mit der Trägerplatte mit steuerbaren Bewegungen in Bezug auf die Blasdorne, wobei die Preformen durch den Transfergreifer nach einer Intensivkühlung in den Kühlhülsen des Entnahmeroboters an den Nachkühler zur vollständigen Abkühlung übergebbar sind.

Eine weitere vorteilhafte Ausgestaltung ist dadurch gekennzeichnet, dass die aussen wassergekühlten Kühlhülsen eine innere Form aufweisen, welche mit Einschluss des gewölbten Bodenteiles der äusseren Form der Preform entspricht und die Kühlhülse mit Einschluss des gewölbten Bodenteiles möglichst dünnwandig ausgebildet ist, so dass über die ganze Kühlhülse und von der Kühlhülse auf die Preformaussenseite durch das kurzzeitige Anliegen ein maximaler Wärmedurchgang bzw. Wärmeübergang hergestellt wird.

Je nach Wandstärke dauert der Giesszyklus 10 bis 15 Sekunden und der totale Zyklus mit Einschluss der ganzen Nachkühlung 30 bis 60 Sekunden. Die Leistungsfähigkeitder Maschine wird jedoch durch die Giesszykluszeit bestimmt. Die Kalibrierung findet während der ersten Phase der Nachkühlung statt, wobei in einer ersten Phase Druckluft von 1 bis 10 bar eingeblasen wird.

Bevorzugt wird die Kühlung der Preformen von der Entnahme aus den Formhälften bis zur Fertigkühlung nicht unterbrochen. Die Blasdorne weisen einen Dichtring aus Weichgummi auf. Auf diese Weise wird sichergestellt, dass auf das Gewindeteil keine Deformationskräftewirken. Vorteilhafterweise wird auch während dem Einfahren der Blasdorne eine örtliche Kühlung und eine Verfestigung der Oberfläche erzeugt, welche in einer ersten Phase auf das offene Gewindeende sowie das Bodenteil der Preform gerichtet ist.

Die neue Lösung teilt die Nachkühlung in zwei unabhängig steuerbare Phasen:
- eine erste Intensivkühlung beschränkt sich auf den Zeitraum eines Spritzzyklus. Die Intensivkühlung findet statt, während der nächste Spritzzyklus abläuft, während einer Zeitspanne von z.B. 5 bis 15 Sekunden.
- Die eigentliche Nachkühlung benötigt ein Mehrfaches an Zeit, meistens das 3- bis 4-fache der Spritzgiesszeit. Hier macht eine Intensivkühlung wirtschaftlich wenig Sinn, weil die Wärmewanderung innerhalb der Wandstärken der Preformen wenig beeinflussbar ist.

### Kurze Beschreibung der Erfindung

In der Folge wird die neue Erfindung an Hand einer Anzahl Ausführungsbeispiele mit weiteren Einzelheiten erläutert. Es zeigen:
- die Figur 1: schematisch eine Gesamtansicht einer Spritzgiessmaschine für die Herstellung von Preformen mit einer Entnahmevorrichtung sowie einem Transfergreifer, ausgerüstet mit einer Vielzahl von Blasdornen;
- die Figuren 2: und 3 je einen Schritt nach Beendigung des Spritzzyklus; bei der Figur 2 übernimmt die Entnahmevorrichtung die noch heissen Preformen aus den offenen Formhälften. Die Figur 3 zeigt den Moment der Intensivkühlung der Preformen;
- die Figur 4: ausschnittsweise eine Übersicht der Phase der Intensivkühlung in der Entnahmevorrichtung;
- die Figuren 5: zeigt ein Trägerplattenstück mit einer Blasdüse;
- die Figuren 6a: bis 6d zeigen einen Kühlstift als Blasdüse ausgebildet in verschiedenen Situationen, die Figur 6a ein Trägerplattenstück mit einer Blasdüse, die Figur 6b eine einzelne Blasdüse, die Figur 6c eine Preform und die Figur 6d die Blasdüse in Kalibrierposition;
- die Figur 7: ein Beispiel für eine Situation in der Phase einer eigentlichen Kalibration einer einzelnen Preform;
- die Figur 8: eine optimierte Lösung in Bezug auf die Kalibration einer Preform sowiedie Ausgestaltung einer wassergekühlten Kühlhülse hinsichtlich Wärmeübergang bzw. Wärmedurchgang.

### Wege und Ausführung der Erfindung

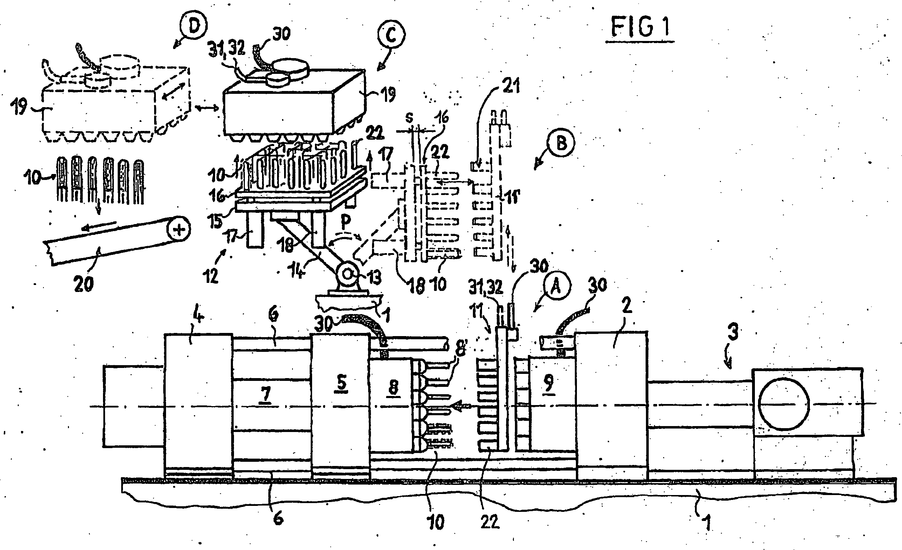

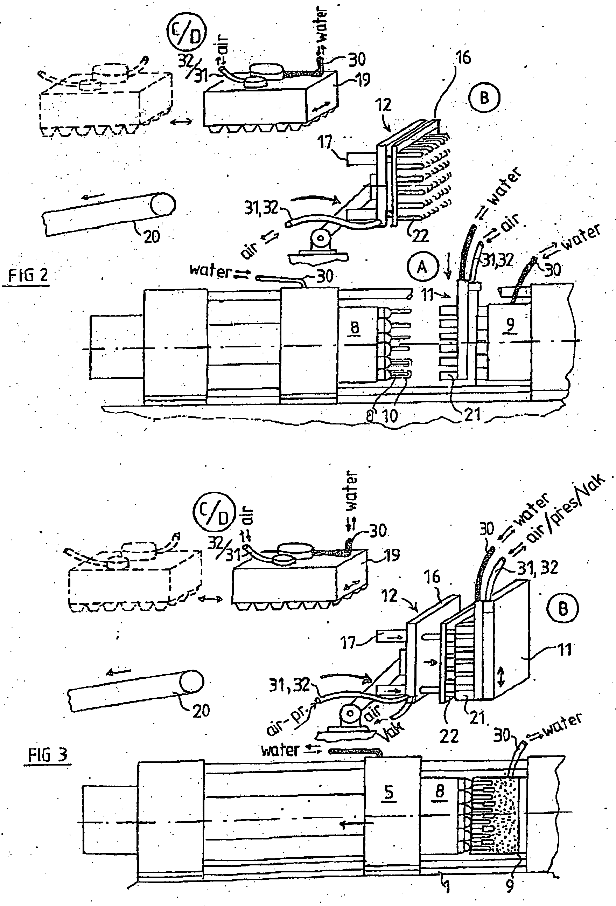

Die Figur 1 zeigt eine ganze Spritzgiessmaschine für die Herstellung von Preformen mit einem Maschinenbett 1, auf dem eine feste Formaufspannplatte 2 und eine Spritzeinheit 3 gelagert sind. Eine Abstützplatte 4 und eine bewegliche Formaufspannplatte 5 sind axial verschiebbar auf dem Maschinenbett 1 abgestützt. Die feste Formaufspannplatte 5 und die Abstützplatte 4 sind durch vier Holme 6 miteinander verbunden, die die bewegliche Formaufspannplatte 5 durchsetzen und führen. Zwischen der Abstützplatte 4 und der beweglichen Formaufspannplatte 5 befindetsich eine Antriebseinheit 7 zur Erzeugung des Schliessdruckes. Die feste Formaufspannplatte 2 und die bewegliche Formaufspannplatte 5 tragen jeweils eine Formhälfte 8 und 9, in denen jeweils eine Vielzahl von Teilformen 8' und 9' angeordnet sind, die zusammen die Kavitäten zur Erzeugung einer entsprechenden Zahl hülsenförmiger Spritzgisssteile bzw. Preformen bilden. Die Teilformen 8' sind als Dorne ausgebildet, an denen nah dem Öffnen der Formhälften 8 und 9 die hülsenförmigen Preformen 10 haften. Die Spritzgiessteile befinden sich zu diesem Zeitpunkt noch in einem heissen und deshalb halb erstarrten Zustand und sind mit unterbrochenen Linien angedeutet. Die gleichen Spritzgiessteile 10 im fertig gekühlten Zustand sind in der Figur 1 links oben dargestellt, wo sie gerade aus einer Nachkühleinrichtung 19 ausgeworfen werden. Die oberen Holme 6 sind zum Zweck der besseren Darstellung der Einzelheiten zwischen den geöffneten Formhälften unterbrochen dargestellt. A bis D zeigen die verschiedenen Stufen der Preform-Nachkühlung.
**"A"** ist die Entnahme der Spritzgiessteile oder Preformen 10 aus den beiden Formhälften. Die noch halbstarren hülsenförmigen Teile werden dabei mittels Kühlhülsen 21 von einer in den Raum zwischen den geöffneten Formhälften und in die Position "A" abgesenkten Entnahmevorrichtung 11 aufgenommen und mit dieser in die Übergabeposition "B" angehoben.
**"B"** ist die Phase der Intensivkühlung, wobei Blasdorne 22 auf einer gesteuert bewegbaren Trägerplatte gehalten und in die Preformen 10 eingeführt werden (Figur 2b).
**"C"** ist die Übergabe der Preformen 10 von einem Transfergreifer 12 an eine Nachkühleinrichtung 19. **"D"** ist der Abwurf der abgekühlten und in einen vollständig formstabilen Zustand gebrachten Preforms aus der Nachkühleinrichtung 19.

Die Figur 1 zeigtdie Hauptschrittefürdas Handling der Preformen. Aus der Position **"B"** werden die senkrecht übereinanderliegend angeordneten, hülsenförmigen Preformen 10 von dem Transfergreifer 12 bzw. 12' übernommen und durch Verschwenken der Transfervorrichtung 12 in Richtung des Pfeiles P in eine Position, horizontal nebeneinander stehend, gemäss Phase "C", gebracht. Der Transfergreifer 12 besteht aus einem um eine Achse 13 schwenkbaren Haltearm 14, der eine Halteplatte 15 trägt, zu der im Parallelabstand eine Trägerplatte 16 für die Blasdorne 22 angeordnet ist. Die Trägerplatte 16 ist mittels zweier steuer- und regelbarer Servomotoren 17 und 18 gemäss Pfeil parallel zur Halteplatte 15 ausstellbar, so dass in der Position "B" die hülsenförmigen Spritzgiessteile 10 aus der Entnahmevorrichtung 11 geholt und in der in die Position "C" geschwenkten Lage in die darüberliegende Nachkühleinrichtung 19 geschoben werden können. Die jeweilige Übergabe erfolgt durch Vergrösserung des Abstandes zwischen der Halteplatte 15 und der Trägerplatte 16. Die noch über 70°C warmen Preformen 10 werden in der Nachkühleinrichtung 19 fertiggekühlt und danach, nach einer Verschiebung der Nachkühleinrichtung 19, in der Position "D" ausgestossen und auf ein Förderband 20 geworfen. Die Schwenkbewegung des Transfergreifers, die lineare Ladebewegung für das Einschieben der Blasdorne und das Quer- und Längsverschieben der Nachkühleinrichtung werden vom elektrischen Servoantrieb vorgenommen, so dass jede Bewegung sowohl zeitlich wie auch in Bezug auf den Weg mit höchster Genauigkeit steuerbar ist. Die Servomotoren können sowohl in Bezug auf Weg und Geschwindigkeit wie auch die aufzubauende Kraft gesteuert/geregelt werden, so dass das Handling und ganz besonders die Einschiebebewegung mit höchster Feinheit und Genauigkeit durchgeführt werden kann.

Die grösste Temperaturabsenkung der Spritzgiessteile 10 von etwa 280° C auf 120° C geschieht noch innerhalb der geschlossenen Formen 8 und 9, wozu ein enormer Kühlwasserdurchsatz sichergestellt Werden muss. Die Entnahmevorrichtung 11 ist in strichlierter Darstellung in einer Warteposition, womit das Ende der Spritzphase angedeutet ist. Das Bezugszeichen 30 ist die Wasserkühlung mit entsprechenden Zu-bzw. Abführleitungen, welche zur Vereinfachung mit Pfeilen dargestellt sind und als bekannt vorausgesetzt werden. Das Bezugszeichen 31/32 bezeichnet die Luftseite, wobei 31 für Einblasen resp. Druckluftzufuhr und 32 für Vakuum resp. Luftabsaugen steht. In den Spritzgiessformen 8 und 9 werden die Preformen noch während dem Spritzzyklus gleichzeitig innen und aussen gekühlt. In den Kühlhülsen der Entnahmevorrichtung 11 findet zuerst nur eine Aussenkühlung statt. Ein weiterer interessanter Punkt ist das Handling in dem Bereich der Nachkühlvorrichtung 19. Die Nachkühlvorrichtung kann während der Entnahmephase "**A**" gemäss Pfeil L horizontal unabhängig verfahren werden von einer Aufnahmeposition in eine Abwurfposition (strichliert dargestellt). Die Nachkühlvorrichtung 19 weist ein Mehrfaches an Fassungsvermögen gegenüber der Kavitätenzahl in den Spritzgiessformhälften auf. Der Abwurf der fertig gekühlten Preforms 10 erfolgt dadurch erst nach zwei, drei oder mehr Spritzgiesszyklen, so dass entsprechend die Nachkühlzeit gegenüber dem Giesszyklus verlängert wird. Für die Übergabe der Preformen von dem Transfergreifer 12 an die Nachkühleinrichtung 19 kann letztere zusätzlich querverschoben und in die passende Position gesetzt werden.

In den Figuren 2 und 3 sind zwei Situationen mit den jeweiligen Kühleingriffsmitteln ebenfalls schematisch dargestellt. Die Figur 2 zeigt den Beginn der Entnahme der Preform 10 aus den Formhälften. Nicht dargestellt sind die Hilfsmittel für das Abstossen der halbstarren Preforms von den Teileformen 8'. Die Trägerplatte 16 mit den Blasdornen 22 ist in zurückgezogener Stellung. In der Figur 3 sind die beiden Formhälften 8 und 9 wieder in geschlossenem Zustand, also in der eigentlichen Giessphase dargestellt. Ferner zeigt die Figur 3 eine Situation für die Kernfunktion der neuen Lösung. Der Transfergreifer 12 ist in der Position gemäss Figur 2, wobei jedoch die Trägerplatte 16 mit den Blasdornen 22 in ausgefahrener Position dargestellt ist. Dabei sind die Blasdorne 22 vollständig in die Kühlhülsen 21 eingeführt, während die Preformen in den Kühlhülsen intensiv gekühlt werden. Der Rest der Nachkühlung findet erst in dem Nachkühler statt, nachdem die Preformen durch den Transfergreifer formstabilisiert aus der Entnahmevorrichtung entnommen und in den Nachkühler eingeführt sind.

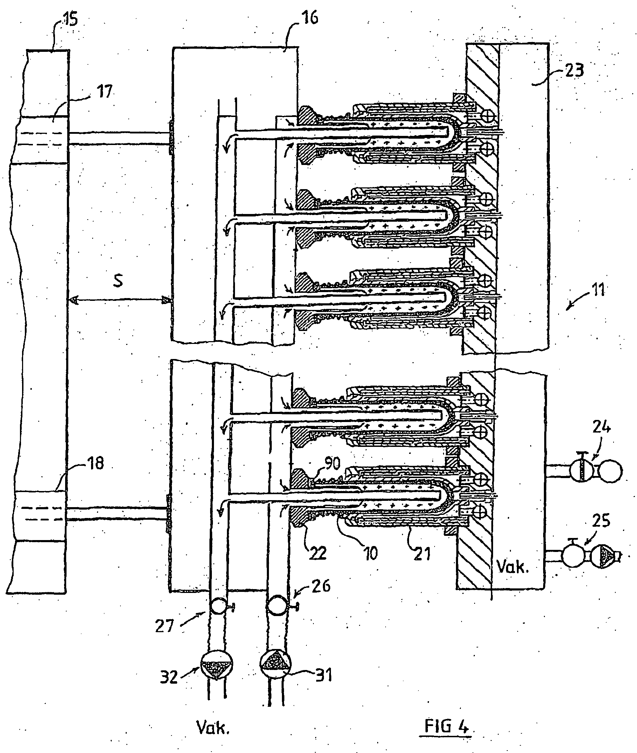

Die Figur 4 zeigt die Phase der intensiven Kühlung. Als Beispiel sind nurfünf Kühlpositionen dargestellt. Während der Phase der Intensivkühlung werden die Preformen 10 sowohl aussen wie innen gekühlt. Die Preformen sind in dieser Phase dauernd an das innere Bodenteil der Kühlhülsen durch Unterdruck im Raum 23 der Entnahmevorrichtung 11 gehalten bzw. angezogen. Die Figur 4 zeigt den Einsatz von Blasluft und Saugluft über zwei getrennte Luftsysteme. Als Beispiel sind nur fünf Kühlpositionen dargestellt. Während der Phase der Intensivkühlung werden die Preformen 10 sowohl aussen wie innen gekühlt. Die Preformen sind in dieser Phase dauernd an das innere Bodenteil der Kühlhülsen durch Unterdruck im Raum 42 der Entnahmevorrichtung 11 gehalten bzw. angezogen. Der Raum 23 kann je nach Bedarf über Ventile 24/25 von Unterdruck auf Überdruck geschaltet werden. In der Phase der Intensivkühlung wird ständig Unterdruck aufrechterhalten, damit die Preformen satt eingezogen bleiben. Am Ende der Intensivkühlung wird auf Überdruck geschaltet, damit die Preformen mit Druckluft ausgestossen werden. Auf der Preforminnenseite wird während der Phase der Intensivkühlung sowie dem Transfer durch Anschluss an eine Vakuumquelle Luft abgesaugt und damit die Preform auf eine Dichtung der Blasdorne 22 gezogen. Für die Übergabe der Preformen an den Nachkühlerwird das Druckluftventil 26 geöffnet und das Vakuumventil 27 geschlossen.

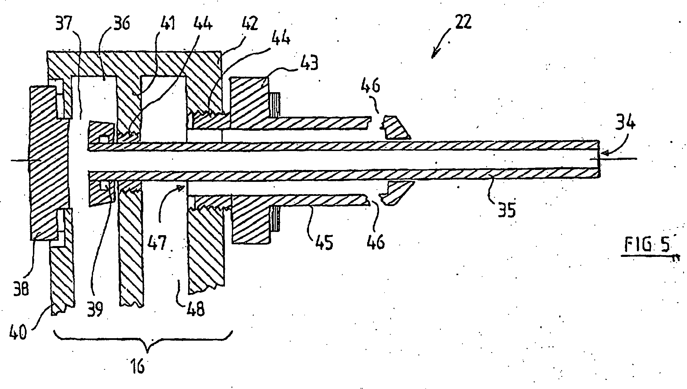

Die Figur 5 zeigt einen Blasdorn 22 in grösserem Massstab. Das Konzept des Kühlstiftes geht davon aus, dass an der Mündung 34 eines Saugrohres 35 Kühlluft abgesaugt wird. Dazu ist das Saugrohr 35 mit einer Unterdruckkammer36 der Trägerplatte 16 über eine Verbindungsöffnung 37 verbunden. Das Saugrohr 35 ist bis in eine Abdichtschraube 38 geführt und über einen O-Ring 39 abgedichtet. Die Trägerplatte 16 istschattenartig aufgebaut mit einer hinteren Wand 40, einer Mittelwand 41 sowie einer Vorderwand 42. Die Unterdruckkammer 36 wird durch die hintere Wand 40 und die Mittelwand 41 gebildet. Die Abdichtschraube 38 ist mit einem Gewinde 44 fest in der Mittelwand 41 eingeschraubt. Der Blasdorn 22 ist über einen Kühlstiftsockel 43 und ein Gewinde 44 in die Vorderwand 42 eingeschraubt und weist einen Mantel 45 mit Blasöffnungen 46 auf. Zwischen Mantel 45 sowie dem Saugrohr 35 besteht ein ringförmiger Luftkanal 49, der im Gewindebereich über eine Öffnung 47 mit einer Druckkammer 48 verbunden ist, so dass Druckluft über die Druckkammer 48, die Öffnung 47, den Ringraum 29 sowie die Blasöffnungen 46 in das Preforminnere geblasen werden kann. Die Druckkammer 48 ist begrenzt durch die Mittelwand 41 sowie die Vorderwand 42.

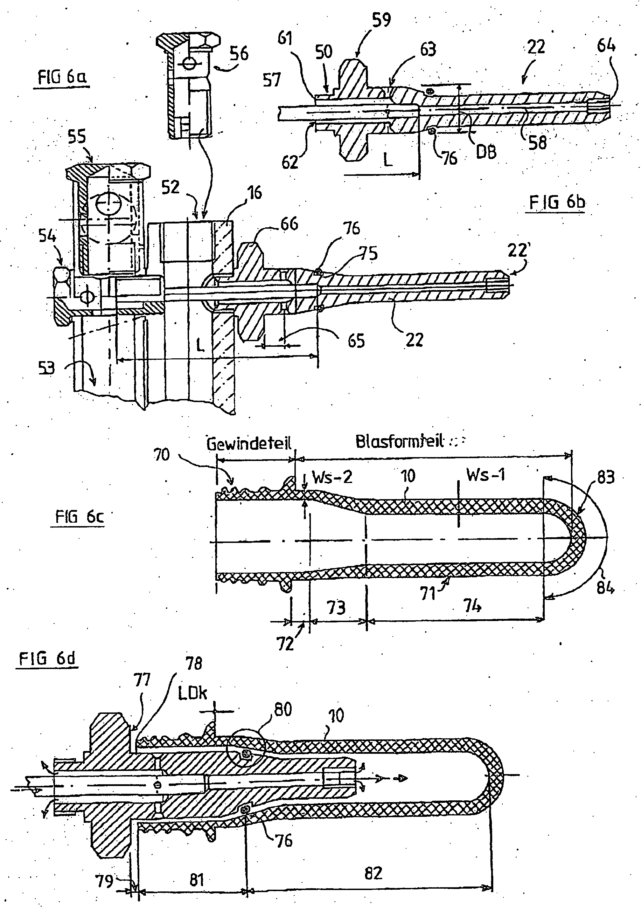

In den Figuren 6a und 6b ist ein Blasdorn 22 dargestellt. Auf der linken Seite weist der Blasdorn 22 ein Schraubgewinde 50 auf, mittels welchem die Blasdorne 22 an der Trägerplatte 16 einschraubbar sind. Wie in der Figur 1 dargestellt ist, weist die Trägerplatte 16 eine grössere Zahl Blasdüsen 22 auf, welche je in mehreren Reihen angeordnet sind. In der Trägerplatte 16 sind zwei Luftsysteme 52 und 53 angeordnet, wobei das Luftsystem 52 für Unterdruck bzw. Vakuum und das Luftsystem 53 für Druckluft ausgelegt ist mit entsprechenden, nicht dargestellten Anschlüssen für einen Drucklufterzeuger bzw. ein Sauggebläse oder eine Vakuumpumpe. Damit die beiden Luftsystem sauber getrennt werden können, sind an den Übergängen Spezialschrauben 54, 55 sowie 56 mit erforderlichen Ausnehmungen für eine Montage sowie eine Durchdringung der jeweiligen Verbindungsstücke vorgesehen. Die Spezialschrauben 54, 55 und 56 müssen zwingend in der richtigen Reihenfolge ein-bzw. ausgeschraubt werden. Im fertig montierten Zustand sollen die beiden Luftsysteme, gegeneinander abgedichtet, ihre je eigene Funktion erfüllen können. Für die Druckluftseite wird ein Blasrohr 57 entsprechend der Länge "L" in der richtigen Montagereihenfolge eingeschoben. Dieses führt die Blasluft über einen Druckluftzufuhrkanal 58 in den Blasdorn 22 bis zur Mündung 64. Für das feste Einschrauben des Schraubgewindes 50 ist am Blasdorn 22 ein 6-Kant-Schlüsselansatz 59 angebracht. Die Saugluftverbindung 61 geht über einen Ringkanal 62 sowie mehrere Querbohrungen 63, welche nahe an dem Dichtring 60 den Ringkanal 62 nach aussen verbinden. Daraus ergibt sich, dass Luft über die Blasmündung 64 ausgeblasen und über die Querbohrungen 63 wieder angesaugt werden kann. Flexible und druckfeste Luftschläuche 31 und 32 stellen die Verbindung zu den entsprechenden Druckluft- oder Sauglufterzeugern her (Figur 1). Die Luftschläuche sind entsprechend für Hochdruck und Vakuum ausgelegt. Vorteilhafterweise weist das ganze Luftsystem rohrartige Verbindungen auf, was für die Festigkeitsfrage optimal ist, sowohl für den Bereich Hochdruck wie Unterdruck. Das Bezugszeichen 65 bezeichnet den Zentriersockel der Blasdorne 22. Die Figur 6a zeigt ein Endstück der Trägerplatte 16 mit einer eingeschraubten Luftdüse 66. Der äussere Durchmesser DB am Kühldorn 22 ist etwas kleiner als der entsprechende innere Durchmesser der Preform 10. Dadurch ergibt sich, unterstützt durch die Luftströmungskräfte, eine Zentrierwirkung für die Preform 10 auf den Blasdüsen 22.

Die Figur 6d zeigt die Blasdüse in der Arbeitsposition während dem Kalibieren und die Figur 6c eine Preform im Schnitt. In der Figur 6c sind die beiden Teile einer Preform, das Gewindeteil 70 sowie das Blasformteil 71, dargestellt. Das Blasformteil 71 hat drei Abschnitte: Einen Halsabschnitt 72, einen konischen Abschnitt 73 sowie einen zylindrischen Abschnitt 74. Der Halsabschnitt 72 weist eine wesentlich geringere Wandstärke Ws-2 auf im Verhältnis zu dem zylindrischen Abschnitt 74 mit einer Wandstärke Ws-1. Das Wandmaterial des Blasformteiles wird für die enorme Vergrösserung beim Blasprozess bzw. bei der Herstellung von PET-Flaschen notwendig. In der Figur 6a und 6b weist die Blasdüse 22 eine Ringnut 75 auf, in die ein Dichtring 76 eingelegt ist. Die Figur 6d zeigt die Blasdüse 22 in Kalibrierposition. Dabei bleibt zwischen der Schulter 77 sowie dem Rand 78 der offenen Preformseite ein Spalt 79. Der Dichtring 76 liegt in dem konischen Bereich 73 an der Innenwand der Preform 10 auf und bildet die Dichtstelle 80. Die Dichtstelle 80 teilt den Preforminnenteil in zwei Abschnitte: einen vorderen Druckraum 81 sowie einen hinteren Kühlraum 82.

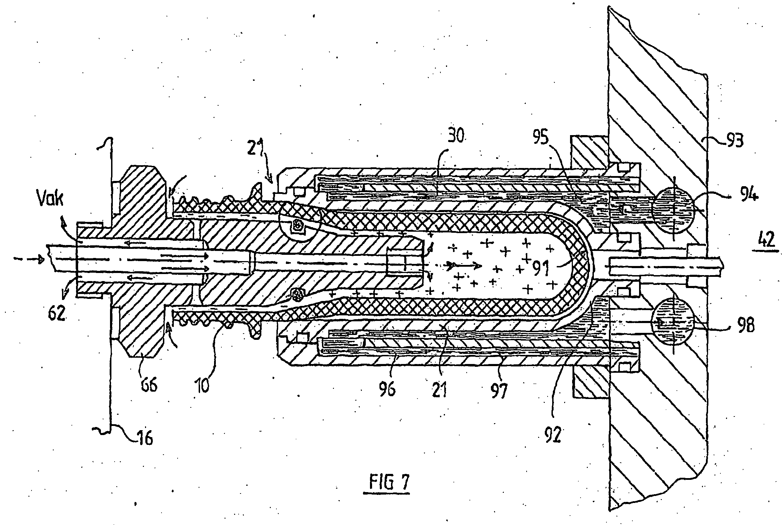

Die Figur 7 zeigt die Situation bei der Kalibration einer Preform 10 bei gleichzeitiger Aussenkühlung in Kühlhülsen entsprechend der Ausgestaltung der Figuren 6a bis 6d. Im hinteren Kühlraum 82 ist mit + Zeichen angedeutet, dass für die Kalibration ein Überdruck hergestellt wird. Wichtig ist dabei, dass die Preform, soweit diese sich in der Kühlhülse 21 befindet; direkten Wandkontakt hat. Dies gilt besonders auch für das ganze Bodenteil der Preform und dem inneren Bodenteil der Kühlhülse.

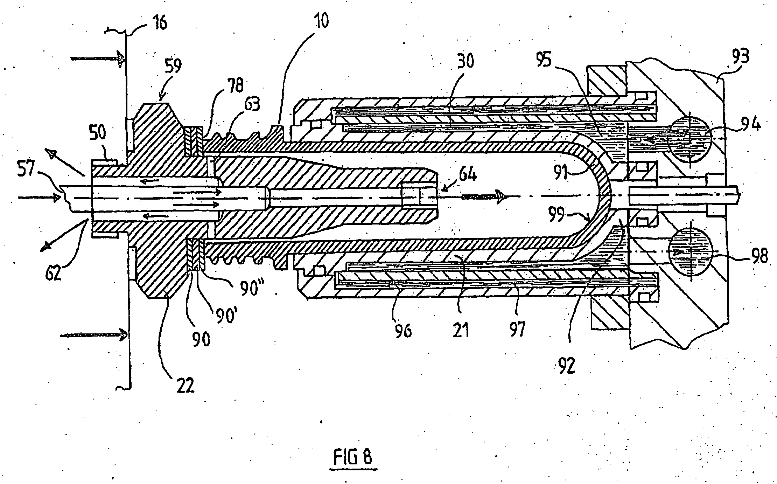

Die Figur 8 zeigt eine Lösung, welche sich besonders in zwei Bereichen von der Lösung gemäss Figur 7 unterscheidet. Die Blasdüse 22 weist eine Dichtung 90, 90', 90" auf, welche stirnseitig auf den Rand 78 aufsteht und an der betreffenden Stelle die Dichtstelle bildet. Um den eigentlichen Dichtschluss herzustellen, wird die Trägerplatte 16 mit präziser weg- und kraftgesteuerter Bewegung an den Rand 78 gepresst. Gleichzeitig wird der Bodenbereich 83 an das gewölbte innere Bodenteil 91 der Kühlhülse gestossen. Die Kühlhülse 21 ist dünnwandig ausgebildet. Dies gilt vor allem auch für das kalottenartige Bodenteil 91. Das kalottenartige Bodenteil 91 weist ein Halsstück 92 auf, welches in einer Grundplatte 93 in Bezug auf die Kühlwasserseite gehalten und abgedichtet ist. Das Kühlwasser 30 wird über einen Vorlaufkanal 94 in einen inneren Kühlraum 95 eingeleitet, strömt entlang der Aussenwandfläche der Kühlhülse 21 und verlässt diese über eine Öffnung 96 über einen äusseren Kühlraum 96 und über den Rücklaufkanal 98. Das Luftsystem ist als geschlossenes System ausgebildet. Druckluft wird über ein Blasrohr 57 und eine Blasmündung 64 der Blasdüse in das Innere der Preform 10 geblasen. Die Luft wird über Querbohrungen 63 sowie einen Ringkanal 62 durch eine nicht dargestellte Vakuumquelle abgesaugt. Beide Seiten können über eine exakte Steuerung der Bewegungen so wie der Kräfte, sowohl mechanisch wie auch in Bezug auf die Luftkräfte, fein aufeinander abgestimmt, werden besonders in der am kritischsten Phase des Beginns der Kalibration bei vollständig eingeschobenen Preformen.

## Patentansprüche

1. Verfahren zur Nachkühlung von Preformen (10) nach der Entnahme aus den offenen Formhälften (8, 9) einer Spritzgiessmaschine, wobei die Preformen (10) in noch heissem Zustand mittels einer Entnahmevorrichtung (11) mit wassergekühlten Kühlhülsen (21) aus den offenen Formen (8, 9) entnommen und in zwei unabhängig steuerbaren Phasen nachgekühlt werden, wobei die Entnahmevorrichtung (11) zwischen den offenen Formen (8, 9) bewegbar ist, wobei die Preformen in einer Entnahmephase "A" direkt aus den offenen Giessformen (8, 9) entnommen und dynamisch vollständig in die Kühlhülsen (21) eingeführt werden und innerhalb der Zeit eines Spritzgießzyklus in einer Phase "B" einer Intensivkühlung, welche die ganze Innen- wie auch die ganze Außenseite eines Blasformteils der Preformen (10) einschließt, unterworfen und anschliessend in einer Nachkühlphase, welche ein Mehrfaches der Spritzzykluszeit beträgt, vollständig gekühlt werden,
**dadurch gekennzeichnet,**
**dass** die Preformen (10) kurz nach der Entnahmephase "A" in den Kühlhülsen (21), deren Innendurchmesser höchstens um einige Hundertstel Millimeter größer gewählt sind, als die Außenabmessungen der noch heißen Preformen, mittels eines Blähdruckes, der durch eine gezielte Steuerung von Druckluft und Saugluft erzeugt wird, vollständig an die ganze Innenwandfläche der wassergekühlten Kühlhülsen (21) der Entnahmevorrichtung (11) angelegt und nochmals in eine exakte Form gebracht werden und dass während der Phase "B" eine Kalibration der Preformen (10) mittels des Blähdrucks und eine Intensivkühlung stattfinden.

2. Verfahren nach Anspruch 1,
**dadurch gekennzeichnet,**
**dass** die Bewegung von Blasdornen (22) zeitlich im Rhythmus des Spritzgiesszyklus getaktet und die Einführbewegung weg- und/oder kraftgesteuert erfolgt.

3. Verfahren nach Anspruch 1 oder 2,
**dadurch gekennzeichnet,**
**dass** jeder Blasdorn (22) gegenüber der jeweiligen Preform (10) abdichtend aufgesetzt wird und Blasluft oder Saugluft derart gesteuert werden, dass während der intensiven Kühlung ein Überdruck in jeder Preform (10) erzeugt und die Preform (10) an die Innenwandung der Kühlhülse (21) angepresst und dadurch kalibriert wird.

4. Verfahren nach Anspruch 1,
**dadurch gekennzeichnet,**
**dass**.der Blasdorne (22) mit einem aufblähbaren Mantel (150) umgeben ist, wobei im Inneren des Mantels (150) eine Kühl- bzw. Druckflüssigkeit zirkuliert zur Kalibration und Kühlung der Preform (10).

5. Verfahren nach einem der Ansprüche 1 bis 4,
**dadurch gekennzeichnet,**
**dass** die dynamische Einführung in der Entnahmevorrichtung (11) durch die gesteuerte Erzeugung von Unterdruck auf Seiten der Kühlhülsen (21) bzw. auf den äusseren Preformboden (84) und die Entnahme aus der Entnahmevorrichtung (11) durch Umschalten auf Überdruck auf den äusseren Preformboden (84) erfolgt.

6. Spritzgießsystem mit Teilformen (8', 9') und einer Vorrichtung, insbesondere zur Durchführung eines Verfahrens nach Anspruch 1, zur Nachkühlung von Preformen (10) nach deren Entnahme aus den offenen Formhälften (8, 9) einer Spritzgiessmaschine, welcher Vorrichtung Hilfsmittel für das Abstossen der halbstarren Preformen (10) von den Teileformen 8' und 9' umfasst und eine Nachkühlung der Preformen (10) in einer Entnahmevorrichtung (11), in der eine Nachkühlung der Preformen innerhalb der Zeit eines Spritzgießzyklus erfolgen kann, sowie in einer ein Mehrfaches an Fassungsvermögen gegenüber der Kavitätenzahl in einer Spritzgießformhälfte aufweisenden Nachkühleinrichtung (19) aufweist, wobei die Entnahmevorrichtung (11) horizontal liegend angeordnete wassergekühlteKühlhülsen (21) aufweist, denen in die Preformen (10) einführbare Blasdorne (22) zugeordnet sind, welche auf einer gesteuert bewegbaren Trägerplatte gehalten werden, wobei die Entnahmevorrichtung (11) zwischen den offenen Formen bewegbar ist und die Vorrichtung eine Steuerung aufweist zur Steuerung aller Bewegungen für das Handling der Preformen (10) und der Blasdorne (22) sowie für einen zyklisch getakteten Einsatz von Druckluft und Saugluft,
**dadurch gekennzeichnet,**
**dass** die Innenform der horizontal liegenden Kühlhülsen (21) der Entnahmevorrichtung (11) auf die entsprechende Innenform der Teilform 9' abgestimmt ist, derart, dass der Innendurchmesser der Kühlhülsen (21) höchstens um einige Hundertstel Millimeter größer gewählt ist, als die Außenabmessungen der noch heißen Preformen (10) und dass die Preformen (10) direkt nach der Entnahme aus den Giessformen (8, 9) für eine rasche Abkühlung der Preformaussenseite bis zum vollflächigen Anliegen an die wassergekühlten Kühlhülsen (21) dynamisch durch eine Linearbewegung einschiebbar und nochmals in eine exakte Form bringbar sind, wobei die Entnahmevorrichtung (11) als Intensivkühlstation ausgebildet ist, in der die Preformen (10) einer Kalibrations- sowie einer Intensivkühlphase unterwerfbar sind, wobei mittels der Blasdorne (22) durch gezielte Steuerung von Druckluft und Saugluft ein Blähdruck erzeugt werden kann, so dass die Preformen (10) mittels des Blähdrucks vollständig an die ganze Innenwandfläche der wassergekühlten Kühlhülsen (21) angelegt werden können, und wobei die Intensivkühlphase die ganze Innen- wie auch die ganze Aussenseite eines Blasformteils der Preformen (10) einschließt.

7. Spritzgießsystem nach Anspruch 6,
**dadurch gekennzeichnet,**
**dass** jeder Blasdorn (22) einen als Sockel (100) ausgebildeten Mantel aufweist, welcher über die Trägerplatte (16) mit einer Druckluftquelle verbindbar ist.

8. Spritzgießsystem nach Anspruch 7,
**dadurch gekennzeichnet,**
**dass** sie eine Entnahmevorrichtung (11) mit Kühlhülsen (21) und eine dazu bis zu einem Dichtschluss bewegbaren Trägerplatte (16) des Transfergreifers (12, 12') mit einem Druckluftanschluss aufweist zur Erzeugung eines kurzzeitigen Blähdruckes im Inneren der Preformen (10), derart, dass jede Preform (10) direkt nach der Entnahme aus den
Formhälften (8, 9) in den Kühlhülsen (21) der Entnahmevorrichtung (11) in noch heissem Zustand kalibrierbar ist.

9. Spritzgießsystem nach Anspruch 8,
**dadurch gekennzeichnet,**
**dass** die Trägerplatte (16) entsprechend der Zahl der Kühlhülsen (21) Blasdorne mit elastischen Dichtungen (76) aufweist, welche zu je einer Preform (10) im Preforminneren eine Dichtstelle (80) bilden zur Erzeugung des Blähdruckes im Inneren der Preformen (10).

10. Spritzgießsystem nach Anspruch 8,
**dadurch gekennzeichnet,**
**dass** die Dichtstelle in Bezug auf das offene Ende der Preformen (10) angeordnet ist und am Ende der Einführbewegung der Blasdorne (22) herstellbar ist, zur Erzeugung eines genügenden Blähdruckes im Inneren der Preformen (10) bzw. über der inneren Fläche der Kühlhülse (21), wobei die Dichtstelle zwischen den einzelnen Blasdorne (22) und dem äusseren Rand des Gewindeteiles der Preformen (10) durch eine Weichdichtung (90, 90', 90") herstellbar ist.

11. Spritzgießsystem nach Anspruch 6,
**dadurch gekennzeichnet,**
**dass** die Blasdorne (22) als Blasdorne ausgebildet sind und einen verschiebbar angeordneten Kontaktkopf (103) und eine bis zum Kontaktkopf (103) durchgehend geführte Blasluftbohrung (111) aufweisen, welche in eine zwischen Blasdorn (22) und Kontaktkopf (103/106) in der Grösse veränderbare Blasluftkammer (112) mündet.

12. Spritzgießsystem nach Anspruch 11,
**dadurch gekennzeichnet,**
**dass** die Blasdorne (22) mit einem Kontaktkühlkopf ausgebildet sind, zur mechanischen Kontaktierung und Kontaktkühlung (106) der entsprechenden inneren Dompartie (99) der jeweiligen Preförm, wobei die kontrollierte Kraft durch Blasluft und / oder durch eine Druckfeder (134) erzeugbar ist.

13. Spritzgießsystem nach Anspruch 11,
**dadurch gekennzeichnet,**
**dass** der Kontaktkopf (103) hülsenartig auf dem Blasdorn (22) zwischen einer maximal aüsgeschobenen und angezogenen Lage frei verschiebbar angeordnet ist, wobei die Verschiebekraft durch die Blasluft und/oder durch eine Druckfeder (134) erfolgt.

14. Spritzgießsystem nach einem der Ansprüche 6 bis 13,
**dadurch gekennzeichnet,**
**dass** die. Intensivkühlstation als baulich unabhängig steuerbare Entnahmestation oder als Teil eines Nachkühlers (19) ausgebildet ist, welcher eine Menge an Kühlhülsen (21) aufweist, entsprechend mehrerer Chargen eines Spritzgiesszyklusses.

15. Spritzgießsystem nach einem der Ansprüche 6 bis 14,
**dadurch gekennzeichnet,**
**dass** sie einen Entnahmeroboter mit Kühlhülsen (21), einen Transfergreifer (12) mit der Trägerplatte16) mit steuerbaren Bewegungen in Bezug auf die Blasdorne (22) aufweist, wobei die Preformen (10) durch den Transfergreifer (12) nach einer Intensivkühlung in den Kühlhülsen (21) des Entnahmeroboters an den Nachkühler (19) zur vollständigen Abkühlung übergebbar sind, wobei die Vorrichtung eine Steuerung aufweist, zur Steuerung aller Bewegungen für das Handling der Preformen (10) und der Blasdorne (22) sowie für einen zyklisch getakteten Einsatz von Druckluft und gegebenenfalls Saugluft.

## Claims

1. A method for the secondary cooling of preforms A method for the secondary cooling of preforms (10) after removal from the open mould halves (8, 9) of an injection moulding machine, wherein the preforms (10) are removed with water-cooled cooling sleeves (21) from the open moulds (8, 9) while still hot by means of a removal device (11) and undergo secondary cooling in two independently controllable phases, wherein the removal device (11) is movable between the open moulds (8, 9), wherein the preforms in a removal phase "A" are removed directly from the open casting moulds (8, 9) and are dynamically introduced completely into the cooling sleeves (21) and, within the time of an injection moulding cycle, in a phase "B" are subjected to an intensive cooling which includes the entire inside as well as the entire outside of a blow mould part of the preforms (10), and are subsequently completely cooled in a secondary cooling phase which is a multiple of the injection cycle time,
**characterized in that**
the preforms (10) shortly after the removal phase "A" in the cooling sleeves (21), the internal diameters of which are selected to be greater by a maximum of a few hundredths of a millimetre than the external dimensions of the still hot preforms, are applied completely against the entire inner wall surface of the water-cooled cooling sleeves (21) of the removal device (11) by means of a swelling pressure, which is generated by a targeted controlling of compressed air and suction air, and are brought again into an exact form, and that during phase "B" a calibration of the preforms (10) by means of the swelling pressure and an intensive cooling take place.

2. The method according to Claim 1,
**characterized in that**
the movement of blow pins (22) is synchronized chronologically with the rhythm of the injection moulding cycle and the introduction movement takes place in a controlled manner with respect to displacement and/or power.

3. The method according to Claim 1 or 2,
**characterized in that**
each blow pin (22) is placed in a sealing manner relative to the respective preform (10) and blast air or suction air are controlled so that an overpressure is generated in each preform (10) during the intensive cooling and the preform (10) is pressed against the inner wall of the cooling sleeve (21) and thereby calibrated.

4. The method according to Claim 1,
**characterized in that**
the blow pin (22) is surrounded by an inflatable casing (150), wherein a cooling- or respectively pressure fluid circulates in the interior of the casing (150) to calibrate and cool the preform (10) .

5. The method according to one of Claims 1 to 4,
**characterized in that**
the dynamic introduction in the removal device (11) takes place through the controlled generation of negative pressure on sides of the cooling sleeves (21) or respectively on the outer perform base (84) and the removal from the removal device (11) takes place by switching to overpressure on the outer preform base (84).

6. An injection moulding system with partial moulds (8', 9') and a device in particular to carry out a method according to Claim 1, for the secondary cooling of preforms (10) after they have been removed from the open mould halves (8, 9) of an injection moulding machine, which device comprises auxiliary means for ejecting the semi-rigid preforms (10) from the partial moulds (8', 9') and a secondary cooling of the preforms (10) in a removal device (11) in which a secondary cooling of the preforms can take place within the time of an injection moulding cycle, as well as in a secondary cooling means (19) having a multiple of volumetric capacity with respect to the cavity number in an injection mould half, wherein the removal device (11) has water-cooled cooling sleeves (21) arranged lying horizontally, to which blow pins (22) able to be introduced into the preforms (10) are assigned, which blow pins are held on a carrier plate which is movable in a controlled manner, wherein the removal device (11) is movable between the open moulds, and the device has a control to control all movements for the handling of the preforms (10) and the blow pins (22) as well as for a cyclically clocked use of compressed air and suction air,
**characterized in that**
the inner form of the horizontally lying cooling sleeves (21) of the removal device (11) is adapted to the corresponding inner form of the partial mould (9') in such a way that the internal diameter of the cooling sleeves (21) is selected to be greater by a maximum of a few hundredths of a millimetre than the external dimensions of the preforms (10) which are still hot, and that the preforms (10) directly after removal from the casting moulds (8, 9) can be introduced dynamically by a linear movement until they lie with the entire surface against the water-cooled cooling sleeves (21) for a quick cooling of the outside of the preform, and can again be brought into an exact form, wherein the removal device (11) is constructed as an intensive cooling station in which the preforms (10) are able to be subjected to a calibration- and an intensive cooling phase wherein by means of the blow pins (22) by targeted controlling of compressed air and suction air a swelling pressure can be generated so that the preforms (10) can be applied by means of the swelling pressure completely against the entire inner wall surface of the water-cooled cooling sleeves (21), and wherein the intensive cooling phase includes the entire inner and the entire outer side of a blow mould part of the preforms (10).

7. The injection moulding system according to Claim 6,
**characterized in that**
each blow pin (22) has a casing constructed as a base (100), which can be connected with a compressed air source via the supporting plate (16).

8. The injection moulding system according to Claim 7,
**characterized in that**
it has a removal device (11) with cooling sleeves (21) and a supporting plate (16) of the transfer gripper (12, 12'), which can be moved up to a tight closure with a compressed air connection to generate a brief swelling pressure inside the preforms (10) such that each preform (10), directly after removal from the mould halves (8, 8'), can be calibrated in the cooling sleeves (21) of the removal device (11) while it is still hot.

9. The injection moulding system according to Claim 8,
**characterized in that**
the supporting plate (16) has blow pins with elastic seals (76) corresponding to the number of cooling sleeves (21), which form a sealing site (80) to each respective preform (10) in the inside of the preform to generate the swelling pressure in the interior of the performs (10).

10. The injection moulding system according to Claim 8,
**characterized in that**
the sealing site is arranged relative to the open end of the preforms (10) and can be established at the end of the introduction movement of the blow pins (22) to generate a sufficient swelling pressure inside the preforms (10) or respectively over the inner area of the cooling sleeve (21), wherein the sealing side between the individual blow pins (22) and the outer edge of the threaded part of the preforms (10) is able to be established by a soft seal (90, 90', 90").

11. The injection moulding system according to Claim 6,
**characterized in that**
the blow pins (22) are constructed as blow pins and have a movably arranged contact head (103) and a blast air bore (111) guided continually up to the contact head (103), which runs into a blast air chamber (112) between the blow pin (22) and the contact head (103/106) and is variable in size.

12. The injection moulding system according to Claim 11,
**characterized in that**
the blow pins (22) are constructed with a contact cooling head for the mechanical contacting and contact cooling (106) of the corresponding inner pin part (99) of the respective preform, wherein the controlled power is able to be generated by blast air and/or by a compression spring (134).

13. The injection moulding system according to Claim 11,
**characterized in that**
the contact head (103) is arranged in the manner of a sleeve on the blow pin (22) between a maximally extended and tightened position so as to move freely, wherein the moving force is effected by the blast air and/or by a compression spring (134).

14. The injection moulding system according to Claims 6 to 13,
**characterized in that**
the intensive cooling station is constructed as a structurally independently controllable removal station or as part of a secondary cooler (19) which has a number of cooling sleeves (21) corresponding to several batches of an injection moulding cycle.

15. The injection moulding system according to one of Claims 6 to 14,
**characterized in that**
it has a removal robot with cooling sleeves (21), a transfer gripper (12) with the supporting plate (16) with controllable movements relative to the blow pins (22), wherein the preforms (10) are able to be transferred by the transfer gripper (12) to the secondary cooling means (19) for complete cooling after an intensive cooling in the cooling sleeves (21) of the removal robot, wherein the device has a control means to control all movements for the handling of the preforms (10) and the blow pins (22) as well as for a cyclically clocked use of compressed air and, if applicable, suction air.

## Revendications

1. Procédé pour le refroidissement ultérieur de préformes (10) après le prélèvement hors des moitiés de moule ouvertes (8, 9) d'une machine de moulage par injection, dans lequel les préformes (10) sont prélevées des moitiés de moule ouvertes (8, 9) à l'état encore chaud via un dispositif de prélèvement (11) avec des douilles de refroidissement (21) refroidies par eau et sont refroidies en deux phases pouvant être commandées de façon indépendante, sachant que le dispositif de prélèvement (11) est mobile entre les moules ouverts (8, 9), sachant que les préformes sont prélevées dans une phase de prélèvement « A » directement des moules de coulée ouverts (8, 9) et sont introduites complètement de manière dynamique dans les douilles de refroidissement (21) et soumises dans une phase « B », pendant la durée d'un cycle d'injection, à un refroidissement intensif qui inclut la face intérieure et également la face extérieure complète d'une pièce moulée par soufflage des préformes (10) et sont ensuite complètement refroidies dans une phase de refroidissement ultérieur qui fait plusieurs fois la durée de cycle d'injection,
**caractérisé en ce que**
les préformes (10), peu après la phase de prélèvement « A » dans les douilles de refroidissement (21) dont le diamètre intérieur est choisi supérieur, au plus de quelques centièmes de millimètres, aux dimensions extérieures des préformes encore chaudes, sont placées, via une pression de soufflage produite par une commande ciblée d'air comprimé et d'air d'aspiration, complètement sur la surface de paroi intérieure des douilles de refroidissement (21) refroidies par eau du dispositif de prélèvement (11) et amenées encore une fois dans une forme exacte, et **en ce qu'**un calibrage des préformes (10) est effectué via la pression de soufflage et un refroidissement intensif pendant la phase « B ».

2. Procédé selon la revendication 1, **caractérisé en ce que** le déplacement de tuyères de soufflage (22) est cadencé de manière temporelle dans le rythme du cycle de moulage par injection et le mouvement d'introduction est commandé à distance et/ou par force.

3. Procédé selon la revendication 1 ou 2, **caractérisé en ce que** chaque tuyère de soufflage (22) est placée en étanchéité par rapport à la préforme respective (10) et que de l'air de soufflage ou d'aspiration est commandé de façon à ce que pendant le refroidissement intensif, une surpression soit produite dans chaque préforme (10) et que la préforme (10) soit comprimée sur la paroi intérieure du manchon de refroidissement (21) et en soit calibrée.

4. Procédé selon la revendication 1, **caractérisé en ce que** la tuyère de soufflage (22) est entourée d'une enveloppe gonflable (150), sachant qu'à l'intérieur de l'enveloppe (150), un liquide de refroidissement respectivement sous pression circule pour calibrer et refroidir la préforme (10).

5. Procédé selon l'une des revendications 1 à 4, **caractérisé en ce que** l'introduction dynamique dans le dispositif de prélèvement (11) s'effectue par la production commandée d'une dépression sur les côtés des douilles de refroidissement (21), respectivement sur les fonds extérieurs des préformes (84), et le prélèvement hors du dispositif de prélèvement (11) par le passage à la surpression sur les fonds extérieurs des préformes (84).

6. Système de moulage par injection comprenant des parties de moule (8', 9') et un dispositif, en particulier pour exécuter un procédé selon la revendication 1, pour le refroidissement ultérieur de préformes (10) après leur prélèvement hors des moitiés de moule ouvertes (8, 9) d'une machine de moulage par injection, lequel dispositif comprend des moyens pour repousser les préformes semi-rigides (10) des parties de moule (8') et (9') et présente un refroidissement ultérieur des préformes (10) dans un dispositif de prélèvement (11) dans lequel un refroidissement ultérieur des préformes peut avoir lieu pendant la durée d'un cycle d'injection ainsi que dans un dispositif de refroidissement ultérieur (19) présentant une contenance multiple par rapport au nombre de cavités dans une moitié de moule de moulage par injection, sachant que le dispositif de prélèvement (11) présente des douilles de refroidissement (21) refroidies par eau disposées horizontalement, auxquelles sont attribuées des tuyères de soufflage (22) pouvant être introduites dans les préformes (10), sachant que le dispositif de prélèvement (11) est mobile entre les moules ouverts, et le dispositif présente une commande pour commander tous les mouvements de manipulation des préformes (10) et des tuyères de soufflage (22) ainsi que pour un emploi d'air comprimé et le cas échéant, d'air d'aspiration, qui est cadencé par cycles,
**caractérisé en ce que**
la forme intérieure des douilles de refroidissement (21) disposées horizontalement du dispositif de prélèvement (11) est ainsi ajustée à la forme intérieure correspondante de la partie de moule (9') que le diamètre intérieur des douilles de refroidissement (21) est choisi supérieur, au plus de quelques centièmes de millimètres, aux dimensions extérieures des préformes encore chaudes et que les préformes (10), directement après le prélèvement hors des moules d'injection (8, 9), pour un refroidissement rapide de la face extérieure des préformes, peuvent être introduites de manière dynamique par un mouvement linéaire jusqu'à reposer de toute leur surface sur les douilles de refroidissement (21) refroidies par eau et peuvent à nouveau être amenées dans une forme exacte, sachant que le dispositif de prélèvement (11) est conçu en tant que poste de refroidissement intensif dans lequel les préformes (10) peuvent être soumises à une phase de calibrage ainsi qu'à une phase de refroidissement intensif, sachant que via les tuyères de soufflage (22), une pression de soufflage peut être produite par une commande ciblée d'air comprimé et d'air d'aspiration, de façon à ce que les préformes (10), via la pression de soufflage, puissent être placées complètement sur toute la surface de paroi intérieure des douilles de refroidissement (21) refroidies par eau, et sachant que la phase de refroidissement intensif inclut la face intérieure et également extérieure complète d'une pièce moulée par soufflage des préformes (10).

7. Système de moulage par injection selon la revendication 6,
**caractérisé en ce que** chaque tuyère de soufflage (22) présente une enveloppe formée comme un socle (100) qui peut être reliée à une source d'air comprimé par le plateau porteur (16).

8. Système de moulage par injection selon la revendication 7,
**caractérisé en ce qu'**il présente un dispositif de prélèvement (11) avec des douilles de refroidissement (21) et un plateau porteur (16) du grappin de transfert (12, 12') mobile par rapport à celui-ci jusqu'à une fermeture d'étanchéité comprenant un raccordement d'air comprimé pour produire une pression de soufflage brève à l'intérieur des préformes (10), de façon à ce que chaque préforme (10), directement après le prélèvement hors des moitiés de moule ouvertes (8, 9), puisse être calibrée à l'état encore chaud dans les douilles de refroidissement (21) du dispositif de prélèvement (11).

9. Système de moulage par injection selon la revendication 8,
**caractérisé en ce que** le plateau porteur (16) présente en fonction du nombre de douilles de refroidissement (21), des tuyères de soufflage avec des joints élastiques (76), lesquels forment un point d'étanchéité (80) à l'intérieur de chaque préforme (10), pour produire la pression de soufflage à l'intérieur des préformes (10).

10. Système de moulage par injection selon la revendication 8,
**caractérisé en ce que** le point d'étanchéité est disposé par rapport à l'extrémité ouverte des préformes (10) et peut être créé à la fin du mouvement d'introduction des tuyères d'étanchéité (22) pour produire une pression de soufflage suffisante à l'intérieur des préformes (10) respectivement sur la surface intérieure du manchon de soufflage (21), sachant que le point d'étanchéité peut être créé entre les tuyères de soufflage (22) individuelles et le bord extérieur de la partie filetée des préformes (10) par un joint souple (90, 90', 90'').

11. Système de moulage par injection selon la revendication 6,
**caractérisé en ce que** les tuyères de soufflage (22) sont conçues en tant que tuyères de soufflage et présentent une tête de contact (103) disposée de manière à pouvoir être déplacée et un alésage d'air de soufflage (111) amené de manière traversante jusqu'à la tête de contact (103), lequel débouche dans une chambre d'air de soufflage (112) modifiable en taille entre la tuyère de soufflage (22) et la tête de contact (103/106) .

12. Système de moulage par injection selon la revendication 11,
**caractérisé en ce que** les tuyères de soufflage (22) sont conçues avec une tête de refroidissement par contact, pour la mise en contact mécanique et le refroidissement par contact (106) de la partie de tuyère intérieure correspondante (99) de la préforme respective, sachant que la force contrôlée peut être produite par de l'air comprimé et/ou par un ressort de pression (134).

13. Système de moulage par injection selon la revendication 11,
**caractérisé en ce que** la tête de contact (103) est disposée à la manière d'un manchon en pouvant être déplacée librement entre une position sortie et rentrée au maximum, sachant que la force de poussée s'effectue par l'air de soufflage et/ou par un ressort de pression (134).

14. Système de moulage par injection selon l'une des revendications 6 à 13,
**caractérisé en ce que** le poste de refroidissement intensif est conçu en tant que poste de prélèvement de construction pouvant être commandée de manière indépendante ou en tant que partie d'un refroidisseur ultérieur (19), lequel présente une pluralité de douilles de refroidissement (21) correspondant à plusieurs charges d'un cycle de moulage par injection.

15. Système de moulage par injection selon l'une des revendications 6 à 14,
**caractérisé en ce qu'**il comprend un robot de prélèvement avec des douilles de refroidissement (21), un grappin de transfert (12) avec le plateau porteur (16) avec des mouvements pouvant être commandés par rapport aux tuyères de soufflage (22), sachant que les préformes (10) peuvent être transférées par le grappin de transfert (12), après un refroidissement intensif dans les douilles de refroidissement (21) du robot de prélèvement, au refroidisseur ultérieur (19) pour le refroidissement complet, sachant que le dispositif présente une commande pour commander tous les mouvements de manipulation des préformes (10) et des tuyères de soufflage (22) ainsi que pour un emploi cadencé de manière cyclique d'air comprimé et le cas échéant, d'air d'aspiration.
